(19)

Europäisches
Patentamt
European
Patent Office
Office européen
des brevets

(11) **EP 1 780 508 A1**

(12) **EUROPEAN PATENT APPLICATION**

(43) Date of publication:
**02.05.2007 Bulletin 2007/18**

(51) Int Cl.:
*G01C 21/34* (2006.01)          *G08G 1/0968* (2006.01)

(21) Application number: **06022712.1**

(22) Date of filing: **31.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.10.2005 JP 2005317434**
**30.11.2005 JP 2005346662**

(71) Applicant: **Aisin AW., Ltd.**
**Anjo-shi,**
**Aichi-ken 444-1992 (JP)**

(72) Inventors:
• **Nakayama, Takaaki**
 **Okazaki-shi**
 **Aichi 444-8564 (JP)**
• **Oonishi, Shino**
 **Okazaki-shi**
 **Aichi 444-8564 (JP)**
• **Takeuchi, Kensuke**
 **Okazaki-shi**
 **Aichi 444-8564 (JP)**

(74) Representative: **Kramer - Barske - Schmidtchen**
 **Radeckestrasse 43**
 **81245 München (DE)**

(54) **Route guidance system and route guidance method**

(57)    A route guidance system has a current-location detecting unit, a route-searching processing unit for searching a searched route, a guidance-intersection setting processing unit for setting a guidance intersection, an assistant guidance intersection determining processing unit for determining whether or not an assistant guidance intersection (ca1) having a parallel road (r1) which extends in the same direction as a departing road (rg) from the guidance intersection (cg) on the searched route (RE1) of the intersections between the current location on the searched route and the guidance intersection, and a leading guidance processing unit for, in the event that there is an assistant guidance intersection, performing leading guidance for leading a self-vehicle to the departing road when the self-vehicle (pr) approaches the guidance intersection after having passed the assistant guidance intersection, and not leading the self-vehicle to the parallel road when the self-vehicle approaches the assistance guidance intersection. Thus, a self-vehicle can be driven along a searched route.

FIG. 7

**EP 1 780 508 A1**

**Description**

The present invention relates to a route guidance system and a route guidance method.

Heretofore, with a navigation system device, for example, an arrangement is made wherein the current location of a vehicle serving as a self-vehicle by GPS (Global Positioning System), i.e., the current location is detected, map data is read out from a data recording unit, a map screen is displayed on a display unit, and the self-vehicle location representing the current location, the map around the self-vehicle, and so forth are displayed on this map screen. Accordingly, a driver can drive a vehicle in accordance with the self-vehicle location and so forth displayed on the map screen.

Also, upon the driver inputting a destination, and setting search conditions, route-searching processing is performed based on these search conditions, a route from a departing location represented with the current location to the destination is searched in accordance with the map data. Subsequently, the route which has been searched, i.e., the searched route is displayed on the map screen together with the self-vehicle location, and guidance of the searched route, i.e., route guidance is performed. Accordingly, the driver can drive the vehicle along the displayed searched route.

Incidentally, with such route guidance, an arrangement is made wherein in the event that it is necessary to turn the vehicle to the right/left at a predetermined intersection, before the vehicle reaches the intersection, i.e., the guidance intersection, e.g., audio is output to perform route guidance. Accordingly, one or more route guidance spots are set at spots apart from the guidance intersection only each predetermined distance before the guidance intersection on the searched route, and upon the vehicle reaching each of the route guidance spots, guidance of contents which are set beforehand for each of the guidance spots is output with audio (e.g., see Japanese Unexamined Patent Application Publication No. 6-295399)

However, with the above-mentioned conventional navigation device, in the case that a road departing from the guidance intersection, that is to say, a road extending in the same direction as the departing road, is at an intersection before the guidance intersection on the searched route, the driver can erroneously recognize the intersection as the guidance intersection, and thus can turn the vehicle to the right or left at this intersection. According, the vehicle cannot be driven reliably according to the searched route.

Accordingly, it is an object of the present invention to provide a route guidance system and route guidance method wherein the above-mentioned problems of a conventional navigation device can be solved, and a self-vehicle can be driven reliably according to the searched route.

To this end, according to one aspect of the present invention, a route guidance system has a current-location detecting unit for detecting the current location of a self-vehicle, route-searching processing means for searching a searched route up to a destination based on said current location, guidance-intersection setting processing means for setting a guidance intersection based on the above-mentioned searched route, assistant guidance intersection determining processing means for determining whether or not an assistant guidance intersection having a parallel road which extends in the same direction as a departing road from the guidance intersection on the searched route and which fulfills a predetermined parallel road determining condition, of the intersections between the current location on the searched route and the guidance intersection, and leading guidance processing means for, in the event that there is an assistant guidance intersection, performing leading guidance for leading a self-vehicle to the departing road when the self-vehicle approaches the guidance intersection after having passed said assistant guidance intersection.

According to the present invention, a self-vehicle is guided to the departing road when the self-vehicle approaches the guidance intersection after having passed the assistant guidance intersection, and so the driver does not erroneously recognize the assistance guidance intersection as the guidance intersection and thus turn the vehicle to the right or left at the assistance guidance intersection, and thus can reliably drive the self-vehicle along the searched route.

Fig. 1 is a diagram illustrating a navigation system according to a first embodiment of the present invention;

Fig. 2 is a flowchart showing the operations of voice output processing means according to the first embodiment of the present invention;

Fig. 3 is a diagram showing a first example of a parallel road according to the first embodiment of the present invention;

Fig. 4 is a diagram showing a second example of a parallel road according to the first embodiment of the present invention;

Fig. 5 is a diagram showing a third example of a parallel road according to the first embodiment of the present invention;

Fig. 6 is a diagram showing a fourth example of a parallel road according to the first embodiment of the present invention;

Fig. 7 is a first diagram showing an example of the voice output processing according to the first embodiment of the present invention;

Fig. 8 is a second diagram showing an example of the voice output processing according to the first embodiment of the present invention; and

Fig. 9 is a diagram showing an example of the voice output processing according to a second embodiment of the present invention.

Embodiments of the present invention will be described in detail below with reference to the diagrams. Note that a navigation system serving as a searched route guidance system will be described.

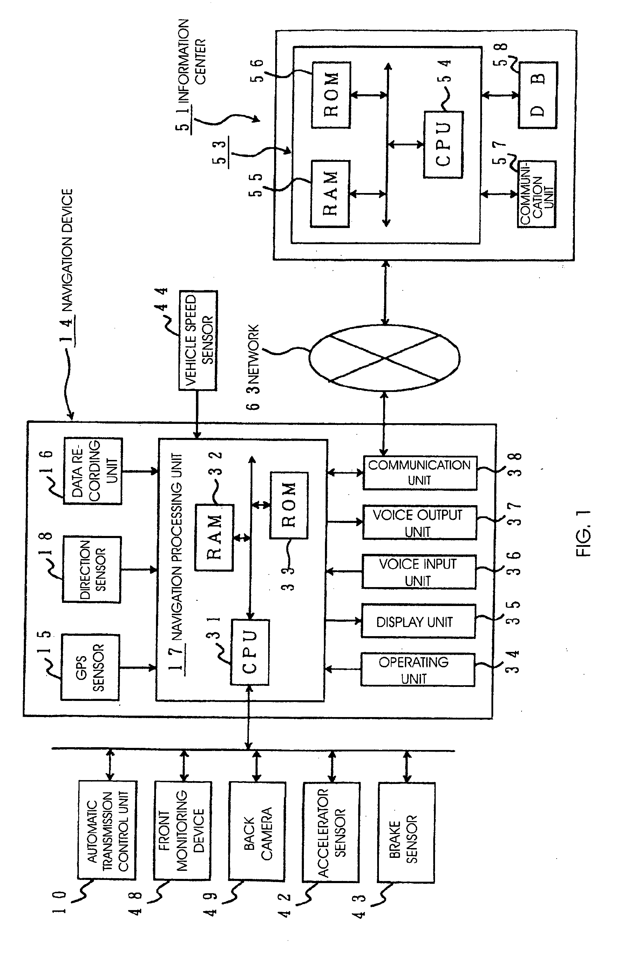

Fig. 1 is a diagram illustrating a navigation system according to a first embodiment of the present invention.

In the diagram, reference numeral 10 denotes an automatic transmission control unit serving as a power train control unit, and this automatic transmission control unit 10 performs control for a power train performing gear shifting at a predetermined gear shifting ratio, for example, a Continuously Variable Transmission (CVT) serving as a non-step transmission, a stepped transmission (automatic transmission), an electric drive device, and so forth.

Also, 14 denotes an information terminal, for example a navigation device serving as an on-board device mounted on a vehicle, 63 denotes a network, 51 denotes an information center serving as an information provider, and the navigation system comprises the automatic transmission control 10, navigation device 14, network 63, information center 51, and so forth.

The navigation device 14 has a GPS sensor 15 serving as a current location detecting unit for detecting the current location of the self-vehicle, a data recording unit 16 serving as an information recording unit wherein various information other than map data is recorded, a navigation processing unit 17 for performing various computing processing such as navigation processing or the like based on input information, a direction sensor 18 serving as a direction detecting unit which detects the direction of the self-vehicle, an operating unit 34 serving as a first input unit for the purpose of the driver serving as an operator to perform predetermined input, a display unit 35 serving as a first output unit for the purpose of notifying the driver, by performing various types of display by images displayed on an screen not shown in the drawings, a voice input unit 36 serving as a second input unit for the purpose of the driver serving as an operator to perform predetermined input by voice, a voice output unit 37 serving as a second output unit for the purpose of notifying the driver by performing various types of notification by audio, and a communication unit 38 serving as a transmitting/receiving unit which functions as a communication terminal, and the GPS sensor 15, data recording unit 16, direction sensor 18, operating unit 34, display unit 35, voice input unit 36, voice output unit 37, and communication unit 38 are connected to the navigation processing unit 17.

Also, the navigation processing unit 17 is connected to the automatic transmission control unit 10, a front monitoring device 48 which is attached to a predetermined location on the front end of the vehicle and is for monitoring the front of the vehicle, a back camera (rear monitoring camera) 49 which is attached to a predetermined location on the rear end of the vehicle, which serves as an image-capturing device for photographing the rear of the vehicle and which serves as a rear monitoring device, an accelerator sensor 42 serving as an engine load detecting device for detecting the operation of the accelerator pedal by the driver with the degree of opening of the accelerator, a brake sensor 43 serving as a control detecting unit for detecting the operation of the brake pedal by the driver with the amount of brake-stepping, a vehicle speed sensor 44 serving as a vehicle speed detecting unit for detecting the vehicle speed S, and so forth. Note that the accelerator sensor 42, brake sensor 43 and so forth make up the operating information detecting unit for detecting operating information of the vehicle by the driver.

The GPS sensor 15 detects the current location on Earth by receiving radio waves generated by a satellite, and also detects the time of day. With an embodiment of the present invention, an arrangement is made wherein a GPS sensor 15 is used as the current location detecting unit, but instead of this GPS sensor 15, an unshown distance sensor, steering sensor, altimeter and so forth can be used individually or in combination. Also, a gyro sensor, geomagnetic sensor or the like can be used as the direction sensor 18. Note that with the present embodiment, a direction sensor 18, vehicle speed sensor 44, and so forth are provided, but in the case of using a GPS sensor which has a function for detecting vehicle direction, vehicle speed, and so forth, the direction sensor 18, vehicle speed sensor 44, and so forth are not needed.

The data recording unit 16 has a map database made up of map data files, and map data is recorded into this map database. This map data includes intersection data relating to intersections, node data relating to nodes, road data related to road links, search data which is processed for searching, and facility data relating to facilities, as well as including object feature data relating to object features on the road.

The object features are display objects installed or formed on roads for providing various types of information on driving to a driver, or performing various types of guidance on driving, and comprise display lines, road signs, pedestrian crossings, manholes, traffic signals, and so forth. The display lines include stop lines for stopping vehicles, vehicular lane borderlines for classifying each lane, compartment lines indicating parking spaces, and so forth. The road signs include traffic classification signs indicating the traveling direction of each lane using an arrow, and guidance signs for announcing a temporary stop spot beforehand, such as "STOP" and the like, and so forth. The object feature data includes positional information wherein the position of each object feature is represented with coordinates or the like, image information wherein each object feature is represented with an image, and so forth. Note that the temporary stop spot includes entrance spots to a preferential road from a non-preferential road, railroad crossings, intersections where a red signal flashes, and so forth.

Also, the road data regarding the above-mentioned lanes includes lane data made up of lane numbers assigned for each lane on a road, lane position information, and so forth. Data for outputting predetermined information using the voice output unit 37 is also recorded in the data recording unit 16.

Further, with the data recording unit 16, a statistics database made up of statistics data files, a driving history database made up of driving history data files, and so forth are formed. Statistics data is recorded in a statistics data file, and driving history data is recording in a driving history data file, either of which is recorded as record data.

The statistics data is record of traffic information provided in the past, i.e., history information representing history, which is created by using the traffic information provided in the past by an unshown road traffic information center or the like such as the VICS (Vehicle Information and Communication System) center or the like serving as an informant, road traffic census information serving as data indicating traffic volume using the road traffic census provided by the Ministry of Land, Infrastructure and Transport, the road time-table information provided by the Ministry of Land, Infrastructure and Transport, and so forth independently, or in combination, and subjecting those to industrial process, and statistics processing as necessary. Note that the statistics data can be added with heavy traffic forecast information for forecasting heavy traffic situations, and so forth. In this case, when creating the statistics data, detailed conditions such as date and time, day of the week, weather, various types of event, season, information of facilities (existence of large-sized facilities such as a department store, supermarket, and so forth), and so forth are added to the history information.

Also, the data items of the statistics data comprise a link number regarding each of road links, a direction flag indicating the direction of travel, an information classification indicating the type of information, the degree of heavy traffic for predetermined timing, link duration indicating duration for each predetermined timing when traveling along each of the road links, average data for every day of the week of the link duration, e.g., day-of-the-week average data, and so forth.

Also, the driving history data, which is collected from multiple vehicles, i.e., a self-vehicle or the other vehicles by the information center 51, is record information indicating the vehicle driving record in the roads where each of the vehicles ran, i.e., driving record, and is calculated as probe data based on driving data, and is accumulated.

The data items of the driving history data comprises link duration for each predetermined timing when traveling along each of the road links, the degree of heavy traffic for each predetermined timing when traveling along each of the road links, and so forth. Note that the statistics data can be added with the driving history data. Also, with the present embodiment, the degree of heavy traffic is used as a heavy traffic index indicating the degree of heavy traffic, which is classified into heavy traffic, congestion, and light traffic.

The data recording unit 16 includes unshown disks such as a hard disk, CD, DVD, optical disc, and so forth to record the various types of data, and also includes unshown heads such as read/write head for reading or writing various types of data, and so forth. Also, with the data recording unit 16, a memory card or the like can be used. Note that each of the disks, memory card, and so forth make up an external storage device.

With the present embodiment, the map database, statistics database, driving history database, and so forth are arranged to be formed in the data recording unit 16, but the map database, statistics database, driving history database, and so forth can be formed in the information center 51.

Also, the navigation processing unit 17 comprises a CPU 31 serving as a control device for controlling the entirety of the navigation device 14, and also serving as a computing device, RAM 32 which is used as working memory when the CPU 31 performs various types of computing processing, ROM 33 in which various types of programs for performing route searching and route guidance as well as a control program, and unshown flash memory which is used to record various types of data, programs, and so forth. Note that the RAM 32, ROM 33, flash memory, and so forth make up an internal storage device.

With the present embodiment, various types of programs can be recorded in the ROM 33, and various types of data can be recorded in the data recording unit 16, but the programs, data, and so forth can be recorded in a disk or the like. In this case, the programs, data, and so forth can be read out from the disk or the like to be written in the flash memory. Accordingly, the programs, data, and so forth can be updated by replacing the disk or the like. Also, the control program, data, and so forth of the automatic transmission control unit 10 can be recorded in the disk or the like. Also, a program, data, and so forth for control by the automatic transmission control unit 10 can be recorded on the disk and so forth. Further, the program, data, and so forth can be also received via the communication unit 38 to be written in the flash memory of the navigation processing unit 17.

The operating unit 34 is for correcting the current location at the time of start of traveling, inputting a departure location and a destination, inputting passing points, and activating the communication unit 38 by the driver operating the operating unit 34. A keyboard, mouse, and so forth, which are disposed independently from the display unit 35, can be used as the operating unit 34. Also, a touch panel which enables predetermined input operations by touching or clicking an image operating unit such as various types of keys, switches, buttons, or the like displayed with an image on the screen formed on the display unit 35 can be used as the operating unit 34.

A display is used as the display unit 35. On various types of screens formed on the display unit 35 the direction of a vehicle can be displayed as a self-vehicle direction with the current location of a vehicle as a self-vehicle, a map, a searched route, the guidance information along the searched route, traffic information, and so forth can be displayed, the distance up to the next intersection in the searched route, and the progressive direction at the next intersection can be displayed, and in addition, the operating guidance, operating menu, and key guidance of the image operating unit, operating unit 34, voice input unit 36, and so forth can be displayed, and the program of an FM multiplex broadcast, and so forth can be displayed.

Also, the voice input unit 36 comprises an unshown microphone and so forth, whereby necessary information can be input by voice. Further, the voice output unit 37 comprises an unshown voice synthesizer, and unshown speakers, and the searched route, guidance information, traffic information, or the like is output from the voice output unit 37, for example, with voice synthesized by the voice synthesizer.

The communication unit 38 includes a beacon receiver for receiving various types of information such as the current traffic information, common information transmitted from the road traffic information center via an electric-wave beacon device, optical beacon device, or the like disposed along a road as an electric-wave beacon, optical beacon, or the like, an FM receiver for receiving such information as an FM multiplex broadcast via an FM broadcasting station, and so forth. Note that the traffic information includes heavy traffic information, restriction information, parking information, traffic accident information, the congestion status information of a rest area, and so forth, and the common information includes news, weather forecast, and so forth. Also, the beacon receiver and FM receiver are arranged so as to be unitized and disposed as a VICS receiver, but can be disposed separately.

The traffic information includes an information classification indicating the classification of information, a mesh number for identifying mesh, a link number for pinpointing a road link connecting between two spots, e.g., intersections, and also indicating the classification of up/down road, and link information indicating the content of the information to be provided corresponding to the link number. For example, in the event that the traffic information is heavy traffic information, the link information comprises heavy traffic head data indicating the distance from the start point of the road link to the head of heavy traffic, the degree of heavy traffic, heavy traffic length indicating the distance from the head of the road link to the end of heavy traffic, link duration indicating duration necessary for traveling along the road link, and so forth.

The communication unit 38 can receive various types of information such as the traffic information, common information, and so forth from the information center 51 via the network 63 as well as data such as the map data, statistics data, driving history data, and so forth.

Accordingly, the information center 51 comprises a server 53, a communication unit 57 connected to the server 53, a database (DB) 58 serving as an information recording unit, and so forth. The server 53 comprises a CPU 54 serving as a control device, and also serving as a computing device, RAM 55, ROM 56, and so forth. Also, the same data as the various data recorded in the data recording unit 16, e.g., the map data, statistics data, driving history data, and so forth are recorded in the database 58. Further, the information center 51 can provide various types of information such as the current traffic information, common information, and so forth transmitted from the road traffic information center, and driving history data collected from multiple vehicles (self-vehicle and other vehicles) in real time.

The front monitoring device 48 comprises a laser radar, a radar such as a millimeter-wave radar or the like, an ultrasonic sensor, or the like, or a combination of those, monitors a preceding vehicle which is a vehicle traveling ahead, and monitors temporary stop spots and obstacles. Also, the front monitoring device 48 detects relative speed indicating relative vehicle speed as to the preceding vehicle as the circumferential information of a vehicle, approach speed as to a temporary stop spot, approach speed for obstacles, and so forth, and calculates the distance between vehicles, inter vehicle time, and so forth.

The back camera 49 is made up of a CCD device, which is attached in a state in which the optical axis is directed diagonally downward, shoots vehicles behind which are other vehicles traveling behind the vehicle, buildings and structures of the road side, and so forth as photographed objects as well as the above object features, and generates the image data of the photographed objects which were photographed to transmit this to the CPU 31. The CPU 31 reads in the image data, and recognizes the respective photographed objects within the image as objects to be recognized by subjecting the image data to image processing. With the present embodiment, a CCD device is used as the back camera 49, but a CMOS device or the like can be used.

Note that the navigation system, navigation processing unit 17, CPU 31, CPU 54, server 53, and so forth serve as a computer by being used independently, or in combination of two or more, and perform computing processing based on various types of programs, data, and so forth. Also, the data recording unit 16, RAM 32, RAM 55, ROM 33, ROM 56, database 58, flash memory, and so forth make up a recording medium. An MPU or the like can be also used instead of the CPU 31 and CPU 54 as a computing device.

Next, description will be made regarding the basic operation of the navigation system having the above configuration.

First, upon the operating unit 34 being operated by a driver to activate the navigation device 14, the unshown navigation initializing processing means of the CPU 31 performs navigation initializing processing, reads in the current location of the vehicle detected by the GPS sensor 15, and the self-vehicle direction detected by the direction sensor 18, and also initializes various types of data. Next, the unshown matching processing means of the CPU 31 performs matching, and pinpoints the current location by determining whether the current location is positioned on which road link based on the course of the current location that has been read in, the shapes and array of the respective road links making up the roads around the current location.

Also, with the present embodiment, the matching processing means pinpoints the current location based on the positions of the respective object features which are the photographed objects photographed by the back camera 49.

Accordingly, the unshown image-recognition processing means of the CPU 31 perform image recognition processing to read in image data from the back camera 49, and recognize the object features within the image made up of the image data. Also, the unshown distance calculation processing means of the CPU 31 perform distance calculation processing to calculate the distance from the back camera 49 to the actual object feature based on the position of the object feature within the image. Subsequently, the current-location pinpointing processing means of the matching processing means perform current-location pinpointing processing to read in the distance, and also read out the object data from the data recording unit 16 to obtain the coordinates of the object feature, and pinpoint the current location based on the obtained coordinates and distance.

Also, the unshown lane-detection processing means of the CPU 31 perform lane detection processing to detect the lane where the vehicle is traveling, that is to say, the driving lane, by comparing the object feature recognized based on the image data with the object feature read out from the data recording unit 16 in the same way.

Note that the lane-detection processing means read in the sensor output of the magnetic-field sensor, and determine whether or not there is a detected object made up of ferromagnet such as a manhole or the like on a predetermined lane on a road, whereby the driving lane can also be detected based on the determination result. Further, the current location is detected by using a high-precision GPS sensor 15, whereby the current location can be detected precisely and the driving lane can be detected based on the detection result. Also, at the same time when subjecting the image data of display lines to image processing, the sensor output of the magnetic-field sensor, the current location, and so forth are combined as necessary, whereby the driving lane can be detected.

Subsequently, the unshown basic-information obtaining processing means of the CPU 31 perform basic information obtaining processing to obtain the map data by reading out the map data from the data recording unit 16, or by receiving the map data from the information center 51 or the like via the communication unit 38. Note that in the event of obtaining the map data from the information center 51 or the like, the basic-information obtaining processing means download the received map data to the flash memory.

Subsequently, the unshown display processing means of the CPU 31 perform display processing to form various types of screen on the display unit 35. For example, the map display processing means of the display processing means perform map display processing to form a map screen on the display unit 35, and display the surrounding map on the map screen, and also display the direction of a vehicle as a self-vehicle direction with the current location which is the self-vehicle location. Accordingly, the driver can drive the vehicle in accordance with the map, self-vehicle location, and self-vehicle direction.

Also, upon the driver operating the operating unit 34 to input a destination, the unshown destination setting processing means of the CPU 31 perform destination setting processing to set a destination. Note that a departure location can be input and set as necessary. Also, a predetermined spot can be registered beforehand, and the registered spot can be set as a destination. Subsequently, upon the driver operating the operating unit 34 to input searching conditions, the unshown searching-conditions setting processing means of the CPU 31 perform searching-conditions setting processing to set searching conditions.

Thus, upon the destination and searching conditions being set, the unshown route-searching processing means of the CPU 31 perform route-searching processing to read in the current location, destination, searching conditions, and so forth, and also read out the search data and so forth from the data recording unit 16, search the route from the departure location represented with the current location to the destination using the searching conditions based on the current location, destination, and search data, and output the route data indicating a searched route. At this time, the route wherein the sum of the link costs appended for each road link is the smallest is taken as a searched route.

Also, in the case wherein multiple lanes are formed on the road, and also in the case of the driving lane being detected, the route searching processing means search the search route with a lane as a unit. In this case, lane numbers of the driving lanes and so forth are also included in the route data.

Note that route searching processing can be performed at the information center 51. In this case, the CPU 31 transmits the current location, destination, searching conditions, and so forth to the information center 51. Upon the information center 51 receiving the current location, destination, searching conditions, and so forth, the unshown route-searching processing means of the CPU 54 perform the same route-searching processing as the CPU 31 to read out the search data from the data base 58, search the route from the departure location to the destination based on the current location, destination, and search data, and output route data indicating a searched route. Next, the unshown transmission processing means of the CPU 54 perform transmission processing to transmit the route data to the navigation device 14.

Subsequently, the unshown guidance processing means of the CPU 31 perform guidance processing to perform route guidance. Accordingly, the route display processing means of the guidance processing means perform route display processing to read in the route data, and display the searched route on the map screen in accordance with the route data.

Now, with the route guidance, in the case that it is necessary to turn the vehicle to the left or right at a predetermined intersection, the aforementioned intersection is set as a guidance spot and also as a guidance intersection. Therefore, the guidance intersection setting processing means of the guidance processing means performs guidance intersection setting processing, and according to the route data, that is to say, based on the searched route, determines whether or not there is an intersection at which the vehicle must be turned to the left or right, and in the case of an intersection at which the vehicle must be turned to the left or right, this intersection is set as a guidance intersection.

Following this, the intersection expanded view forming processing means of the guidance processing means performs intersection expanded view forming processing, and prior to the vehicle arriving at the guidance intersection, displays an expanded view of the guidance intersection at a predetermined region of the map screen, that is to say, an intersection expanded view, and performs route guidance with the intersection expanded view. Note that in the case that the searched route is being searched with a lane as a unit, the intersection expanded view forming processing means displays the driving lane subjected to route guidance in the intersection expanded view, and performs route guidance with a lane as a unit. In this case, a map of the vicinity of the guidance intersection, the searched route, and landmarks such as facilities serving as a marker at the guidance intersection are displayed on the intersection expanded view, and in the case of route guidance being performed with a lane as a unit, the driving lane is also displayed.

Also, the voice output processing means of the guidance processing means performs voice output processing sets one or more route guidance spots at locations separated only a preset distance prior to (on the side of the current location of) the guidance intersection on the searched route, and when a vehicle arrives at the various route guidance spots, route guidance regarding the guidance intersection is output by voice from the voice output unit 37 with content previously set for each route guidance spot. Note that the intersection expanded view is displayed from the time of arrival at the first route guidance spot.

Now, in the case there is a road extending in the same direction as the departing road from the guidance intersection at an intersection before the guidance intersection on the searched route, the driver may erroneously recognize this intersection as the guidance intersection and can turn the vehicle to the right or left at the intersection.

Thus, the voice output processing means guides the driver of the vehicle so as to not erroneously recognize the intersection before the guidance intersection as the guidance intersection.

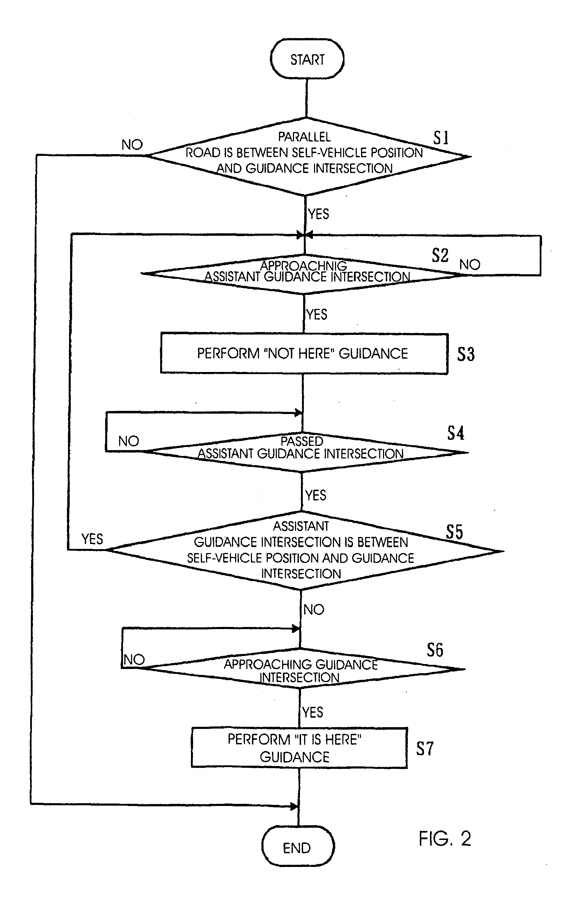

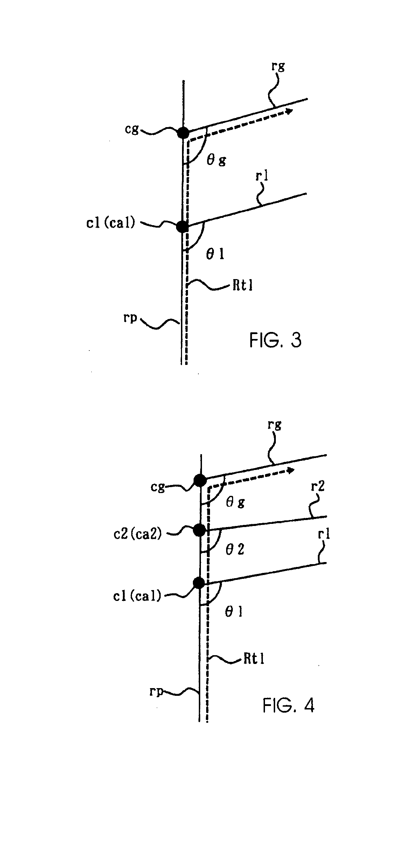

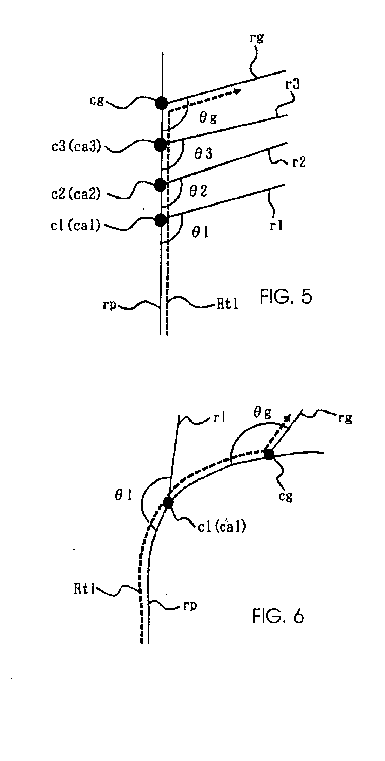

Fig. 2 is a flowchart showing the operation of the voice output processing means according to the first embodiment of the present invention, Fig. 3 is a diagram showing a first example of a parallel road according to the first embodiment of the present invention, Fig. 4 is a diagram showing a second example of a parallel road according to the first embodiment of the present invention, Fig. 5 is a diagram showing a third example of a parallel road according to the first embodiment of the present invention, and Fig. 6 is a diagram showing a fourth example of a parallel road according to the first embodiment of the present invention.

First, the assistance guidance intersection determining processing means of the voice output processing means performs assistance guidance intersection determining processing, and determines whether or not there is an intersection having a road which a driver could erroneously recognize as the guidance intersection, that is to say, a parallel road, between the self-vehicle location on the searched route and the guidance intersection. Therefore, the parallel road determining processing means of the assistance guidance intersection determining processing means performs parallel road determining processing, reads out road data, intersection data, and the like from the data recording unit 16 (Fig. 1), and determines whether or not there is an intersection between the self-vehicle location on the searched route and the guidance intersection, and in the case there is an intersection, determines whether or not parallel road determining conditions will hold for each road extending in the same direction as the departing road from the guidance intersection of the searched route, for each intersection, and in the case that the parallel road determining conditions will hold, determines that the applicable road is a parallel road.

In Figs. 3 through 6, Rt1 denotes the searched route, cg denotes the guidance intersection, ci (wherein i = 1, 2, and so on) denotes an intersection between the self-vehicle location and the guidance intersection, rp denotes a road whereupon a vehicle is traveling and enters the intersection ci and the guidance intersection cg on the searched route Rt1, that is to say, the entrance road, rg denotes a departing road from the guidance intersection cg on the searched route Rt1, ri (wherein i = 1, 2, and so on) denotes a connecting road which is connected to each intersection ci and which extends in the same direction as the departing road rg. Note that with the present embodiment, in the case of the departing road rg extending in the direction of a right turn at the guidance intersection cg, the connecting road ri is set to extend in the direction of a right turn at each intersection ci, in the case of the departing road rg extending in the direction of a left turn, the connecting road ri is set to extend in the direction of a left turn at each intersection ci. Also, θg denotes the link angle showing the angle formed by the entrance road rp and departing road rg at the guidance intersection cg, and θi (wherein i = 1, 2, and so on) denotes the link angle showing the angle formed by each entrance road rp and connecting road ri at each intersection ci. Note that with each intersection ci, the value of i becomes smaller for the distances closer to the self-vehicle position. Also, the various locations (coordinates) of the guidance intersection cg and intersections ci, θi, and so forth, are recorded as intersection data in the data recording unit 16.

First, the intersection indicator calculating processing means of the parallel road determining processing means performs intersection indicator calculating processing, calculates the intersection distance Li (wherein i = 1, 2, and so on) showing the distance along the road from each intersection ci to the guidance intersection cg as a first determining indicator showing the relationship of the position of the intersection ci and the position of the guidance intersection cg, and calculates the road angle difference $\Delta\theta i$ (wherein i = 1, 2, and so on)

$$\Delta\theta i = \theta g - \theta i$$

shown as the absolute value of the difference between the link angle θg and each link angle θi, as a second determining indicator showing the relationship of the link angle θg and each link angle θi.

Next, the parallel road condition determining processing means of the parallel road determining processing means performs parallel road condition determining processing, and as a first condition, determines whether or not the intersection distance Li is shorter than a threshold value Lth1. Also, as a second condition, determination is made as to whether the road angle difference $\Delta\theta i$ is smaller than the threshold $\delta\theta$th1. Also, in the case that the first and second conditions hold, the intersection distance Li is shorter than the threshold value Lth1, and the road angle difference $\Delta\theta i$ is smaller than the threshold value $\delta\theta$th1, the parallel road condition determining processing means determines that the parallel road conditions hold, and determines that this road is a parallel road. Also, in the case that at least one of the first and second conditions do not fulfill the conditions, and the intersection distance Li is greater than the threshold value Lth1, or the road angle difference $\Delta\theta i$ is greater than the threshold value $\delta\theta$th1, the parallel road condition determining processing means determines the that parallel road conditions do not hold, and determines that the applicable road is not a parallel road. Note that instead of using the intersection distance Li, a direct distance from the intersections ci to the guidance intersection cg can be used as the first determining indicator, or instead of using the road angle difference $\Delta\theta i$, the ratio of each link angle θi as to the link angle $\Delta\theta g$ can be used as the second determining indicator.

Subsequently, in the case that the parallel road condition determining processing means determine that the applicable road is a parallel road, the intersection corresponding to the parallel road out of the intersections ci is set the assistant guidance intersection caj (wherein j = 1, 2, and so on), and calculates the distance Lmin between the self-vehicle location and the closest assistant guidance intersection, and determines whether or not the vehicle has approached the assistant guidance intersection caj, based on whether or not the distance Lmin is shorter than the threshold value Lth2.

Then, upon the vehicle approaching the assistant guidance intersection caj, the non-leading guidance processing means of the voice output processing means performs non-leading guidance processing, and performs guidance of "not here" serving as non-leading guidance, so as not to lead the vehicle erroneously, that is to say, so as not to let the driver enter the parallel road at the assistant guidance intersection caj.

Next, upon the vehicle passing through the assistant guidance intersection caj, the assistant guidance intersection determining processing means of the voice output processing means performs assistant guidance intersection determining processing to determine whether or not there is an assistant guidance intersection caj between the self-vehicle position and the guidance intersection cg, and in the case there is an assistant guidance intersection caj the non-leading assistant guidance processing means performs "not here" guidance serving as non-leading guidance each time the vehicle approaches the nearest assistant guidance intersection.

Note that with the present embodiment, first, determination is made as to whether or not there is a parallel road between the self-vehicle position and the guidance intersection, and in the case of multiple parallel roads between the self-vehicle position and the guidance intersection cg, the intersection corresponding to each parallel road is set as the assistant guidance intersection caj, wherein an arrangement is made for non-leading guidance is performed sequentially for the assistant guidance intersections nearest the self-vehicle position out of the various assistant guidance intersections caj, but in the case of multiple parallel roads between the self-vehicle position and the guidance intersection cg, the intersection corresponding to the parallel road closest to the self-vehicle position out of the various parallel roads are sequentially set as the assistant guidance intersections, and so non-leading guidance can be performed for the various assistant guidance intersections.

Following, the leading guidance processing means of the voice output processing means performs leading guidance processing, calculates the distance Lg between the self-vehicle position and the guidance intersection cg, determines whether or not the vehicle has approached the guidance intersection cg, based on whether the distance Lg is shorter than the threshold Lth3.

Then, when the vehicle approaches the guidance intersection cg, the leading guidance processing means performs "turn here" guidance serving as leading guidance so as to lead the driver to turn the vehicle onto, that is to say, to enter, the departing road rg at the guidance intersecting cg.

Next, the flowchart will be described.

Step S1 Determine whether or not there is a parallel road between the self-vehicle position and the guidance intersection cg.
Step S2 Standby to approach the assistant guidance intersection caj, and in the case of approaching, the flow proceeds to step S3.
Step S3 Perform "not here" guidance.
Step S4 Standby to pass through the assistant guidance intersection caj, and in the event of passing through the assistant guidance intersection caj, the flow proceeds to step S5.
Step S5 Determine whether or not there is an assistant guidance intersection caj between the self-vehicle position and the guidance intersection cg. In the case that there is an assistant guidance intersection caj between the self-vehicle position and the guidance intersection cg, the flow returns to step S2, and in the case there is no assistant guidance intersection caj, the flow proceeds to step S6. Step S6 Standby to approach the guidance intersection cg, and in the case of approaching the guidance intersection cg, the flow proceeds to step S7.
Step S7 Perform "turn here" guidance and end the processing.

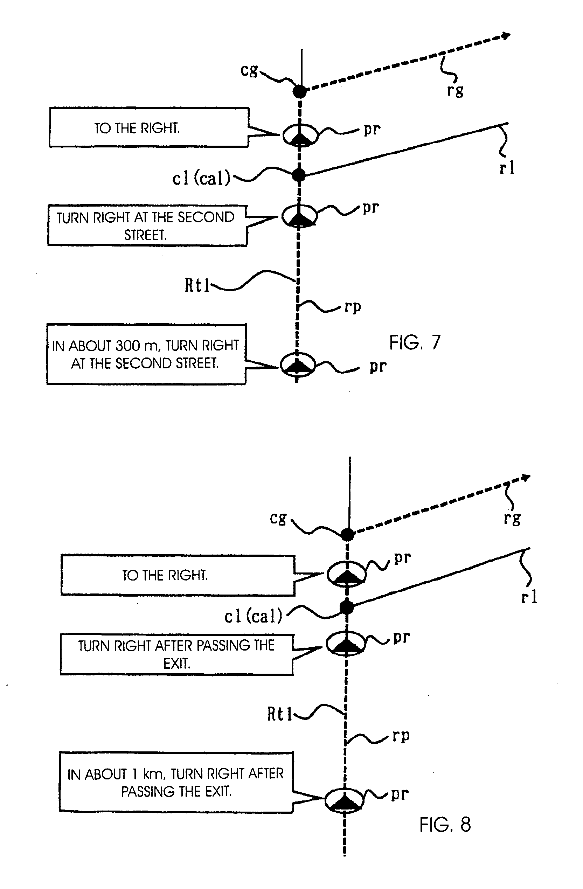

Next, an example of the voice output processing in the event of a parallel road such as that shown in Figs. 7 and 8 will be described.

Fig. 7 is a first diagram showing an example of the voice output processing according to the first embodiment of the present invention, and Fig. 8 is a second diagram showing an example of the voice output processing according to the first embodiment of the present invention.

In the drawings, Rt1 denotes the searched route, cg denotes the guidance intersection, c1 denotes an intersection between the self-vehicle position and the guidance intersection cg, rp denotes an entry road to the guidance intersection cg, rg denotes a departing road from the guidance intersection cg, r1 denotes a connecting road connected to the same side as the departing road rg at the intersection c1, and in this case, this connecting road r1 is a parallel road. Also, pr is a vehicle at the self-vehicle position.

In the example shown in Fig. 7, upon the vehicle pr arriving at a guidance point a predetermined distance, for example only X1 [m], from the guidance intersection cg, the destination guidance processing means of the voice output processing means performs destination guidance processing, and the route guidance regarding the guidance intersection cg is output by voice with a message such as "In about 300 [m], turn right at the second street". In this case, the destination guidance processing means reads the number of the intersection c1 between the self-vehicle position to the guidance intersection cg, and displays the departing road rg from the guidance intersection cg as how many roads down, for example, "the second".

Following, upon the vehicle pr approaching the intersection c1 serving as an assistant guidance intersection, the non-leading guidance processing means performs "not here" guidance with the number of connecting roads ri from the self-vehicle position to the departing road rg, such as a message "it is the second street to the right". Then upon the vehicle pr approaching the guidance intersection cg, the leading guidance processing means performs "it is here" guidance with a message such as "turn to the right" for example.

Also, in the example shown in Fig. 8, upon the vehicle pr arriving at a guidance point a predetermined distance, for example only X1 [m], from the guidance intersection cg, the destination guidance processing means outputs route guidance regarding the guidance intersection by voice with a message such as "In about 1 [km], pass the XX exit and turn in the right direction". In this case, the destination guidance processing means reads the information showing features of the intersection c1 which is between the self-vehicle position and the guidance intersection cg, and shows that the guidance intersection cg is further down from the intersection c1 as "pass the XX exit".

Following this, upon the vehicle pr approaching the intersection c1 serving as an assistant guidance intersection ca1, the non-leading guidance processing means performs "not here" guidance with the features of the intersection cl, with a message such as "pass the exit and to the right". Then, upon the vehicle pr approaching the guidance intersection cg, the leading guidance processing means performs "it is here" guidance with a message such as "it is in the right direction", for example.

With the present embodiment, with the example shown in Fig. 7, the "not here" guidance is performed with the number of connecting roads ri from the guidance intersection cg to the departing road rg, but for example, can be performed with the number of intersections $c_i$ to the guidance intersection cg, such as a message of "turn right at the second intersection". Also, in the event that the guidance intersection cg has a traffic signal but the assistant guidance intersection caj has no traffic signal, "not here" guidance can be performed according to whether there is a traffic signal, such as a message of "turn right at the intersection with a traffic signal". Also, in the example shown in Fig. 8, the "not here" guidance and be performed with the features of the intersections $c_i$ up to the guidance intersection cg, for example, the exits of a freeway.

Thus, in the case that there is a parallel road at a predetermined intersection before the guidance intersection cg on the searched route Rt1, upon the vehicle pr approaching the intersection, "not here" guidance is performed, and so the driver does not erroneously recognize the aforementioned intersection as the guidance intersection cg. Accordingly, the vehicle is not turned right or left at the intersection, and so the vehicle pr can be driven reliably along the searched route Rt1.

Also, "it is here" guidance and "not here" guidance is performed in coordination, and so the vehicle pr can be driven even more reliably along the searched route Rt1.

With the present embodiment, in the case of multiple assistant guidance intersections caj between the self-vehicle position and the guidance intersection cg, "not here" guidance is performed regarding each assistant guidance intersection caj, but an arrangement may be made wherein "not here" guidance is performed regarding the assistant guidance intersection nearest the self-vehicle position, and "not here" guidance is not performed on other assistant guidance intersections until approaching the guidance intersection cg.

In such a case, frequent voice output can be prevented, and so discomfort to the driver can be prevented. Also, in this case, showing "not here" guidance as the number of connecting roads $r_i$ from the self-vehicle position to the guidance intersection cg, the number of intersections $c_i$ to the guidance intersection cg, and so forth is desirable.

Now, with the various assistant guidance intersection caj, non-leading guidance can be performed in actuality by not performing guidance. Next, a second embodiment of the present invention will be described, which has an arrangement wherein, upon the vehicle pr approaching the assistant guidance intersection caj, the vehicle pr is not led to the connecting road $r_i$, but rather non-leading guidance is performed in actuality, and after the vehicle pr passes the assistant guidance intersection caj and approaches the guidance intersection cg, leading guidance is performed so as to lead the vehicle pr to the departing road rg.

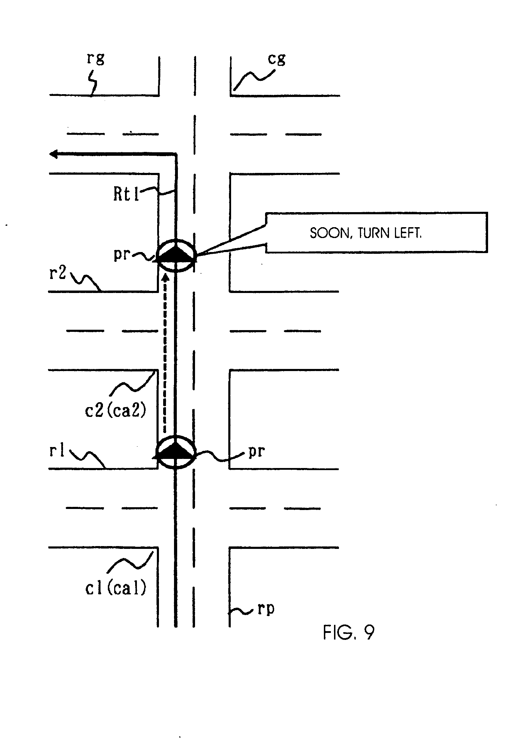

Fig. 9 is a diagram showing an example of the voice output processing according to the second embodiment of the present invention.

In this diagram, Rt1 denotes the searched route, cg denotes the guidance intersection, c1 and c2 denote intersections between the self-vehicle position and the guidance intersection cg, rp denotes an entrance road to the guidance intersection cg, rg denotes a departing road from the guidance intersection cg, r1 and r2 denote connecting roads connected on the same side as the departing road rg, and in this case, let us say that these connecting roads r1 and r2 are parallel roads. Also, pr denotes a vehicle in the self-vehicle position.

With the present embodiment, upon the vehicle pr approaching the intersection c1 and c2 serving as assistant guidance intersections ca1 and ca2, the non-leading guidance processing means does not lead the vehicle pr to the connecting roads r1 and dr2, and moreover, does not perform "not here" guidance. Accordingly, the non-leading guidance processing means performs non-leading guidance in actuality.

Following this, after the vehicle pr has passed the assistant guidance intersections ca1 and ca2 and approaches the guidance intersection cg, the leading guidance processing means performs "it is here" guidance with a message such as "soon, turn to the left" or the like.

In this case, as shown in Fig. 9, the route guidance points are moved by the non-leading guidance processing means, as shown with the dotted line arrows, until there are no more assistant guidance intersections ca1 and ca2.

Thus, with the present embodiment, with each assistant guidance intersections caj, non-leading guidance is performed in actuality by not performing any guidance, and since frequent voice output can be prevented, and thus discomfort to the driver can be prevented.

Note that the present invention is not restricted to the aforementioned embodiments; rather, various modifications can be made based on the spirit of the present invention, and these should not be excluded from the scope of the present invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A route guidance system comprising:

    a current-location detecting unit (15, 18, 44) for detecting the current location of a self-vehicle (pr);

route-searching processing means (31) for searching a searched route (Rt1) up to a destination based on said current location;

guidance-intersection setting processing means (31) for setting a guidance intersection (cg) based on said searched route;

assistant guidance intersection determining processing means (31) for determining whether or not there is an assistant guidance intersection (caj) having a parallel road which extends in the same direction as a departing road (rg) from the guidance intersection on the searched route and which fulfills a predetermined parallel road determining condition, of intersections between the current location on said searched route and the guidance intersection; and

leading guidance processing means (31) for, in the event that there is an assistant guidance intersection, performing leading guidance for leading a self-vehicle to said departing road when the self-vehicle approaches the guidance intersection after having passed said assistant guidance intersection.

2. The route guidance system according to Claim 1, comprising parallel road determining processing means for, determining whether or not there is a parallel road, based on the relationship between the position of the intersections between the current location on said searched route and the position of the guidance intersection.

3. The route guidance system according to Claim 1, comprising parallel road determining processing means for determining whether or not there is a parallel road, based on the relationship between a linking angle formed by the entry road towards the guidance intersection on the searched route and the departing road from the guidance intersection on the searched route, and a linking angle formed by the entry road towards the intersections between the current location and the guidance intersection on the searched route and a road extending in the same direction as said departing road.

4. The route guidance system according to any one of claims 1 to 3, comprising non-leading guidance processing means for performing non-leading guidance so as not to lead the self-vehicle to the parallel road when the self-vehicle approaches the assistant guidance intersection in the event that there is said assistant guidance intersection.

5. The route guidance system according to Claim 4, wherein said non-leading guidance processing means performs non-leading guidance at the number of roads extending in the same direction as the departing road between the current location and the departing road of the guidance intersection.

6. The route guidance system according to Claim 4 or 5, wherein said non-leading guidance processing means performs non-leading guidance at the number of intersections between the current location and the guidance intersection.

7. The route guidance system according to Claim 4, 5 or 6 wherein said non-leading guidance processing means performs non-leading guidance with features of the assistance guidance intersection.

8. The route guidance system according to any one of Claims 4 to 7, wherein said non-leading guidance processing means performs non-leading guidance based on the presence/absence of traffic signal lights at said assistance guidance intersection and guidance intersection.

9. The route guidance system according to any one of Claims 4 to 8, wherein said non-leading guidance processing means performs non-leading guidance by not performing leading guidance.

10. A route guidance method comprising:

a step for searching a searched route (Rt1) to a destination based on the current location of a self-vehicle (pr) detected by a current location detecting unit (15, 18, 44);

a step for setting of a guidance intersection (cg) based on said searched route;

a step for determining whether or not an assistant guidance intersection (caj) having a parallel road which extends in the same direction as a departing road (rg) from the guidance intersection on the searched route and which fulfills a predetermined parallel road determining condition, of the intersections between the current location on said searched route and the guidance intersection; and

a step for performing leading guidance for, in the event that there is an assistant guidance intersection, leading a self-vehicle to said departing road when the self-vehicle approaches the guidance intersection after having passed said assistant guidance intersection.

**10** AUTOMATIC TRANSMISSION CONTROL UNIT

**48** FRONT MONITORING DEVICE

**49** BACK CAMERA

**42** ACCELERATOR SENSOR

**43** BRAKE SENSOR

**14** NAVIGATION DEVICE

**15** GPS SENSOR

**18** DIRECTION SENSOR

**16** DATA RE-CORDING UNIT

**17** NAVIGATION PROCESSING UNIT

RAM **32**

**31** CPU

**33** ROM

**44** VEHICLE SPEED SENSOR

**34** OPERATING UNIT

**35** DISPLAY UNIT

**36** VOICE INPUT UNIT

**37** VOICE OUTPUT UNIT

**38** COMMUNICATION UNIT

**63** NETWORK

**51** INFORMATION CENTER

**53**

**55** RAM

**56** ROM

**54** CPU

**57** COMMUNICATION UNIT

**58** DB

FIG. 1

START

S1

PARALLEL
ROAD IS BETWEEN SELF-VEHICLE POSITION
AND GUIDANCE INTERSECTION

NO

YES

S2

APPROACHNIG
ASSISTANT GUIDANCE INTERSECTION

NO

YES

PERFORM "NOT HERE" GUIDANCE | S3

S4

PASSED
ASSISTANT GUIDANCE INTERSECTION

NO

YES

S5

ASSISTANT
GUIDANCE INTERSECTION IS BETWEEN
SELF-VEHICLE POSITION AND GUIDANCE
INTERSECTION

YES

NO

S6

APPROACHING GUIDANCE
INTERSECTION

NO

YES

PERFORM "IT IS HERE"
GUIDANCE | S7

END

FIG. 2

FIG. 3

FIG. 4

FIG. 5

FIG. 6

FIG. 7

FIG. 8

FIG. 9

**European Patent Office**

**EUROPEAN SEARCH REPORT**

Application Number

EP 06 02 2712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 836 074 A2 (ZEXEL CORP [JP] VISTEON TECHNOLOGIES LLC [US]) 15 April 1998 (1998-04-15) * page 3, lines 46-48; figures 1,6 * * page 5, lines 4-35; figure 5 * ----- | 1,2,4-6, 9,10 | INV. G01C21/34 G08G1/0968 |
| X | US 2002/010543 A1 (WATANABE MITSUAKI [JP] ET AL) 24 January 2002 (2002-01-24) * paragraphs [0020], [0040], [0041], [0059], [0062], [0075]; figures 6,7 * ----- | 1,2,4-10 | |
| X | US 6 253 153 B1 (KANTANI MASAKATSU [JP] ET AL) 26 June 2001 (2001-06-26) * column 3, line 44 - column 4, line 42; figure 1 * * column 5, lines 2-40; figures 3,5 * ----- | 1,8-10 | |
| P,X | EP 1 696 209 A (LG ELECTRONICS INC [KR]) 30 August 2006 (2006-08-30) * paragraphs [0019], [0020], [0036] - [0040]; claim 1; figure 2 * * paragraphs [0025] - [0027], [0032], [0040], [0050], [0051]; figure 5a * ----- | 1-6,9,10 | |

TECHNICAL FIELDS SEARCHED (IPC)

G01C
G08G

The present search report has been drawn up for all claims

| Place of search | Date of completion of the search | Examiner |
|---|---|---|
| Munich | 2 February 2007 | Jakob, Clemens |

EPO FORM 1503 03.82 (P04C01)

**EP 1 780 508 A1**

## ANNEX TO THE EUROPEAN SEARCH REPORT
## ON EUROPEAN PATENT APPLICATION NO.

EP 06 02 2712

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2007

| Patent document cited in search report | | Publication date | Patent family member(s) | | Publication date |
|---|---|---|---|---|---|
| EP 0836074 | A2 | 15-04-1998 | CA | 2217319 A1 | 11-04-1998 |
| | | | DE | 69728348 D1 | 06-05-2004 |
| | | | DE | 69728348 T2 | 30-12-2004 |
| | | | JP | 3352000 B2 | 03-12-2002 |
| | | | JP | 10122893 A | 15-05-1998 |
| | | | US | 5904728 A | 18-05-1999 |
| US 2002010543 | A1 | 24-01-2002 | JP | 2001324345 A | 22-11-2001 |
| US 6253153 | B1 | 26-06-2001 | JP | 2000146604 A | 26-05-2000 |
| EP 1696209 | A | 30-08-2006 | CN | 1821719 A | 23-08-2006 |
| | | | KR | 20060091614 A | 21-08-2006 |
| | | | US | 2006195258 A1 | 31-08-2006 |

EPO FORM P0459

For more details about this annex : see Official Journal of the European Patent Office, No. 12/82

19

**EP 1 780 508 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6295399 A